# EUROPEAN PATENT APPLICATION

(11) **EP 1 056 280 A2**
(43) Date of publication of application: **29.11.2000**
(21) Application number: 99126162.9
(22) Date of filing: 30.12.1999
(51) Int. Cl.: H04N 5/225, H04N 5/232

(54) **Digital camera system and method for displaying images of a scene to a user through an optical viewfinder**

(30) Priority: 27.05.1999 US 321256
(71) Applicant: Hewlett-Packard Company, Palo Alto, California 94304-1112 (US)
(72) Inventor: Campbell, David K., Loveland, CO 80538 (US)
(74) Representative: Schoppe, Fritz, Dipl.-Ing.

(57) **Abstract**

A digital camera system (70) is provided for displaying images of a scene to a user through an optical viewfinder (82). A lens (31), a conversion device (34), a storage device (36), and a display device (39) are included within a housing (84) of the digital camera system (70). The lens (31) receives light from a scene. The conversion device (34) receives light from the lens (31) and produces data signals based on the light received from the lens (31). The storage device (36) receives the data signals from the conversion device (34) and stores information based on the data signals. The display device (39) is coupled to the conversion device (34) and the storage device (36) and produces an image based on the data signals. Light from the lens (31) and the image produced by the display device (39) are directed through a beam splitter (58) toward an opening in the housing (84) such that a user can selectively view the image from the lens (31) and/or the image from the display device (39) by looking through the opening.

## Description

### BACKGROUND OF THE INVENTION

### FIELD OF THE INVENTION

The present invention generally relates to digital cameras and, in particular, to a system and method for utilizing an optical viewfinder to display different types of images of a scene to a user.

### RELATED ART

Most cameras include an optical viewfinder that can be used to view an image of a scene. A user generally uses the optical viewfinder to properly point the camera before taking a picture. Once the camera is properly positioned, a picture is taken by capturing light that is being received through the lens of the camera.

In digital cameras, light is captured by exposing a charge coupled device (CCD) to the light received by the lens. Through techniques well known in the art, the CCD converts the light into electrical or data signals that can be stored in memory or otherwise processed as desired. Furthermore, in addition to conventional optical viewfinders, most digital cameras also include a liquid crystal display (LCD) capable of receiving the data signals produced by the CCD and of displaying images defined by the data signals. Consequently, a user can position the camera by either viewing the image produced by the optical viewfinder or by viewing the image produced by the LCD. In addition, the user can also use the LCD to view pictures previously taken, if desired.

However, separately providing an optical viewfinder and an LCD increases the size of digital cameras. This is usually an undesirable effect since larger sized cameras are typically more difficult to handle and transport. Furthermore, the LCD is sometimes difficult to view, especially when the surroundings of the camera are bright (e.g., when the LCD is exposed to direct sunlight). Therefore, even though digital cameras provide the user with the option of using the LCD to position the camera, many users choose to use conventional optical viewfinders, especially in bright conditions.

Thus, a heretofore unaddressed need exists in the industry for providing a more compact digital camera. It is desirable for the LCD of the digital camera to be easily viewed in different types of conditions so that users will not be deterred from utilizing the LCD due to the conditions of the surroundings.

### SUMMARY OF THE INVENTION

The present invention overcomes the inadequacies and deficiencies of the prior art as discussed hereinbefore. Generally, the present invention provides a system and method for displaying images received by a digital camera.

The present invention utilizes a lens, a conversion device, a storage device, and a display device included within a housing. The lens receives light from a scene. The conversion device receives light from the lens and produces data signals based on the light received from the lens. The storage device receives data signals from the conversion device and stores information based on the data signals. The display device is coupled to the storage device and produces an image based on the data signals. Light from the lens and the image produced by the display device are directed toward an opening in the housing such that a user can selectively view the light from the lens and/or the image from the display device by looking through the opening.

In accordance with another feature of the present invention, a beam splitter is used to transmit the image from the display device and light from the lens toward the opening in the housing.

In accordance with another feature of the present invention, a controller is used to receive inputs from a user interface in order to control whether light from the lens and/or the image from the display device is visible through the opening.

The present invention can also be viewed as providing a method for displaying images received by a digital camera. Briefly described, the method can be broadly conceptualized by the following steps: providing a housing having an opening; receiving light; storing digital data based on the light; producing an image based on the digital data; transmitting the light through the opening; and transmitting the image through the opening.

Other features and advantages of the present invention will become apparent to one skilled in the art upon examination of the following detailed description, when read in conjunction with the accompanying drawings. It is intended that all such features and advantages be included herein within the scope of the present invention and protected by the claims.

### BRIEF DESCRIPTION OF THE DRAWINGS

The invention can be better understood with reference to the following drawings. The elements of the drawings are not necessarily to scale relative to each other, emphasis instead being placed upon clearly illustrating the principles of the invention. Furthermore, like reference numerals designate corresponding parts throughout the several views.
FIG. 1 is a diagram illustrating a conventional digital camera system.
FIG. 2 is a diagram illustrating a detailed view of the display device shown in FIG. 1.
FIG. 3 is a diagram illustrating a conventional digital camera system that provides "through-the-lens" viewfinder capability.
FIG. 4 is a diagram illustrating a digital camera system in accordance with the present invention.
FIG. 5 is three-dimensional diagram of the digital camera system of FIG. 4.
FIG. 6 is a diagram illustrating the digital camera system of FIG. 4 when light from the lens is prevented from reflecting off of the beam splitters.
FIG. 7A is a front view of a housing for the digital camera system of FIG. 4.
FIG. 7B is a back view of the housing of FIG. 7A.
FIG. 8 is a diagram illustrating the digital camera system of FIG. 4 where an image from the lens and the image produced by the display device can be viewed through the viewfinder.
FIG. 9 is a diagram illustrating a controller and a user interface connected to components of the system shown in FIG. 4.
FIG. 10A is a diagram illustrating the system of FIG. 4 utilizing a shutter in an open position.
FIG. 10B is a diagram illustrating the system of FIG. 10A when the shutter is in a closed position.
FIG. 11 is a diagram illustrating another configuration of the system of FIG. 4.

### DETAILED DESCRIPTION OF THE PREFERRED EMBODIMENT

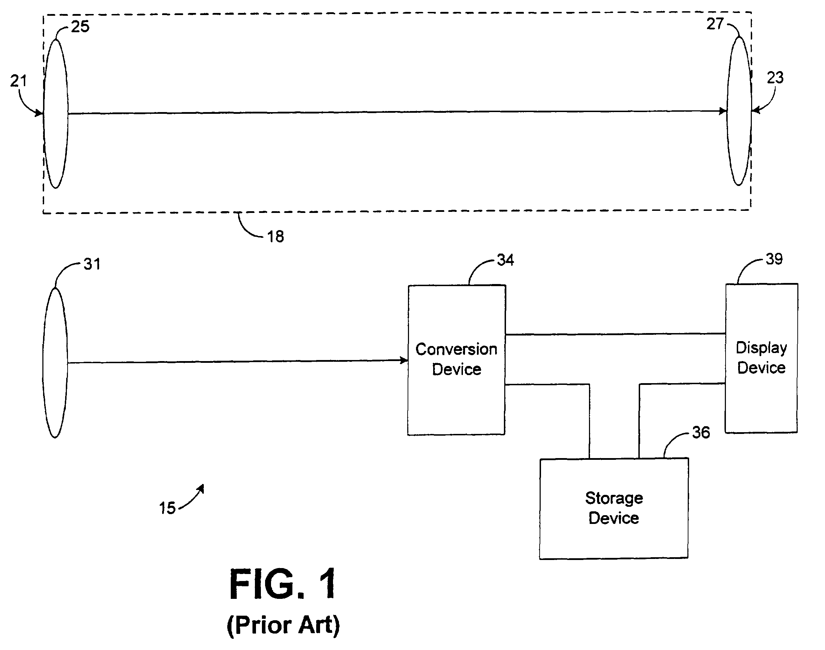

FIG. 1 depicts a conventional digital camera system 15. The system 15 includes an optical viewfinder 18 to allow a user to properly position the camera system 15 before taking a picture. Light from a scene enters the optical viewfinder 18 at one end 21 of the optical viewfinder 18 and passes out of the optical viewfinder 18 at an opposite end 23. The optical viewfinder 18 often includes a lens 25 and an eyepiece lens 27 respectively located at each end 21 and 23 to form an image of the light as it passes through the viewfinder 18. Optical viewfinders 18 also often include prisms and/or mirrors to orient the image correctly for the user. These prisms and/or mirrors are not shown in FIG. 1 for simplicity but should be apparent to one skilled in the art.

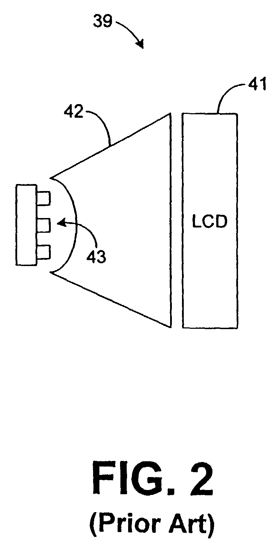

Another lens 31 also receives light from a scene. The end 21 of the viewfinder 18 and the lens 31 are usually positioned such that the viewfinder 18 and the lens 31 receive light from the same scene (*i.e*., the end 21 and lens 31 are pointed in the same general direction). Light passes through the lens 31 and is imaged by a conversion device 34, such as a charge coupled device (CCD), for example. Through known techniques, the conversion device 34 converts the light received from the lens 31 into electrical or data signals. These data signals are transmitted to a storage device 36 and/or a display device 39. As shown by FIG. 2, the display device 39 usually includes a liquid crystal display (LCD) 41 that receives light through a reflector 42 from multiple light emitting diodes (LEDs) 43 and, through known techniques, produces an image defined by the data signals transmitted to the display device 39.

To take a picture, data from the data signals currently transmitted from the conversion device 34 is stored by the storage device 36. The data stored in the storage device 36 for each picture defines an image of the scene viewed by the lens 31 when the respective picture was taken. When desired, the data of any of the pictures may be transmitted to the display device 39, which displays the image of the picture through known techniques. Alternatively, the display device 39 can receive data signals from the conversion device 34 to display an image of the scene currently viewed by the lens 31. Therefore, a user may view the display device 39 to see either an image of the scene currently viewed by the lens 31 or an image of a picture already taken by the camera system 15. Consequently, to properly position the camera system 15, the user may either look through the viewfinder 18 to see an image of the scene or may view the display device 39 when the display device 39 is receiving signals directly from the conversion device 34.

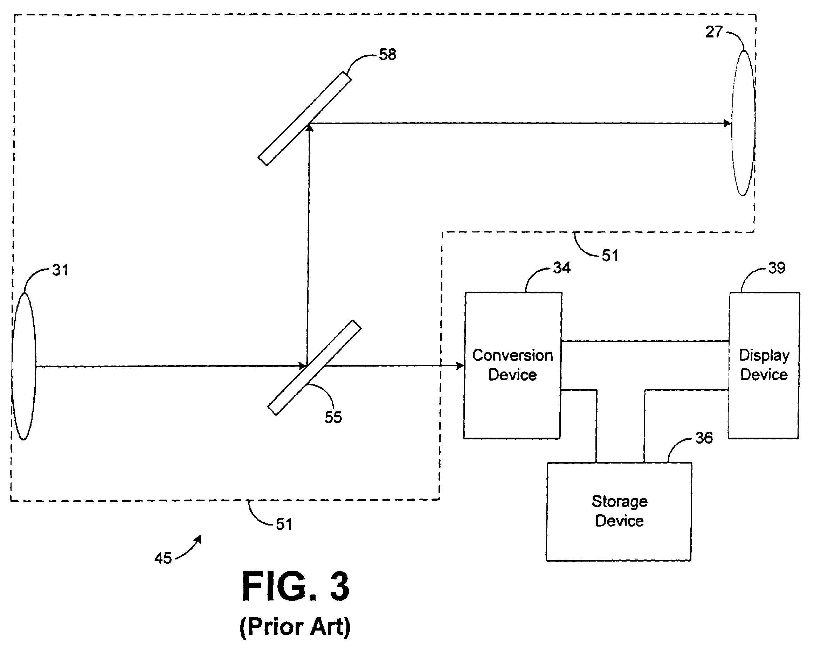

FIG. 3 shows another conventional camera system 45 similar to the system 15 described hereinabove. In this regard, the system 45 includes a lens 31, a conversion device 34, a storage device 36, and a display device 39 that operate essentially as described hereinabove. However, unlike the viewfinder 18, the viewfinder 51 of system 45 has "through-the-lens" viewfinder capability, meaning that the image produced by the viewfinder 51 at lens 27 is defined by light received from the lens 31. In this regard, a beam splitter 55, such as a prism, for example, allows some light from lens 31 to pass and reflects some light from lens 31 toward another beam splitter 58. A "beam splitter" is a well known device that both allows light to pass through the device and that reflects light.

At least a portion of the light that passes through the beam splitter 55 is received by the conversion device 34, and at least a portion of the light that is reflected by the beam splitter 55 is reflected by the beam splitter 58 toward lens 27. Therefore, by looking through the eyepiece lens 27, the user views light that has previously passed trough lens 31. As a result, the user is better able to use the viewfinder 51 for positioning and focusing the lens 31 of the camera system 45, since the user can view the same light that is received by the lens 31. The viewfinder 18 may incorporate other devices including other beam splitters and/or mirrors to orient the images correctly for the user.

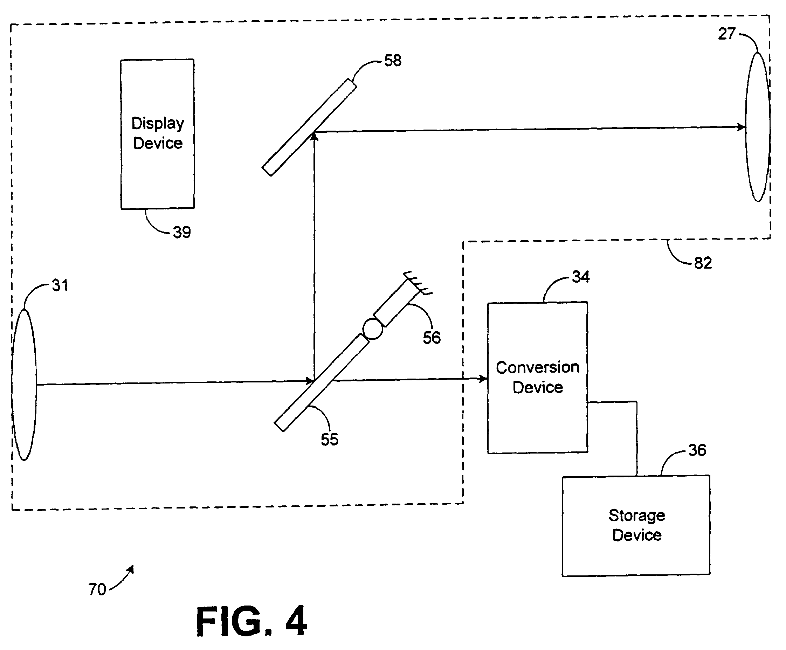

FIG. 4 depicts a camera system 70 in accordance with the present invention. The system 70 includes a lens 31 that receives light from a scene. The light passes through lens 31 toward a beam splitter 55. A portion of the light passes through beam splitter 55 and is received by conversion device 34. The conversion device 34, through conventional techniques, produces data signals based on the light received by the conversion device 34. As an example, the conversion device 34 may be a charge coupled device (CCD), which is a well known device of the prior art.

A storage device 36, such as a memory card, for example, is coupled to the conversion device 34 and receives the data signals from the conversion device 34. At selected times (*i.e*., when taking a picture), the storage device 36 is designed to store the data defined by the data signals currently received from the conversion device 34. Therefore, as known in the art, the data stored in the storage device 36 defines the pictures that are taken by the camera system 70.

The user preferably uses the optical viewfinder 82 to position the camera system 70 before taking a picture. In this regard, the optical viewfinder 82 produces an image of the scene viewed by the lens 31. The user can view this image to determine whether the camera system 70 is properly positioned. There are several configurations of the camera system 70, which will be discussed in detail hereinafter, that may be employed to display an image of the scene to the user.

If the user wishes to directly view the light received from the lens 31, the configuration of FIG. 4 is preferably employed. In this regard, the beam splitter 55 is preferably positioned such that light passing through lens 31 is incident onto the beam splitter 55, as shown by FIG. 4. In this regard, a positioning device 56, such as a rotatable mount, for example, may be used to position the beam splitter 55 as discussed herein. In this regard, the positioning device 56 may also include an actuator capable of selectively moving the beam splitter 55 as desired.

As described hereinabove, the beam splitter 55 allows a portion of the light from the lens 31 to pass through the beam splitter 55 toward the conversion device 34. However, the beam splitter 55 is positioned such that a portion of the light is reflected by the beamsplitter 55 toward another beam splitter 58. The beam splitter 58 is any device that is capable of combining the images produced by a display device 39 (which will be described in more detail hereinbelow) and the lens 31. In other words, the beam splitter 58 is capable of receiving an image from display device 39 and an image from lens 31 and of directing these images in the same general direction.

In the preferred embodiment, the beam splitter 58 is positioned to reflect at least a portion of the light from beam splitter 55 toward lens 27. As a result, a portion of the light received from the lens 31 is reflected by the beam splitter 55 and beam splitter 58 toward lens 27, and the user may, therefore, look through the lens 27 to see an image of the scene. It should be noted that lens 27 does not form a necessary part of the present invention. Therefore, lens 27 may be omitted from system 70, if desired, or any conventional lens or lenses 27 may be employed without departing from the principles of the present invention.

A display device 39, such as the liquid crystal display (LCD) 41 and the light emitting diodes (LEDs) 43 depicted in FIG. 2, is preferably positioned within the optical viewfinder 82 so that the user may see an electronic image of the scene via the viewfinder 82, if desired. In this regard, the display device 39 is coupled to both the conversion device 34 and the storage device 36. When the user wishes to see an electronic image of the light currently received by the lens 31, data signals transmitted from the conversion device 34 to the display device 39 are used by the display device 39 to produce an image. The image produced by the display device 39 is transmitted toward beam splitter 58. At least a portion of the light transmitted by the display device 39 is incident on lens 27. Therefore, the user may look through lens 27 to view the image produced by the display device 39.

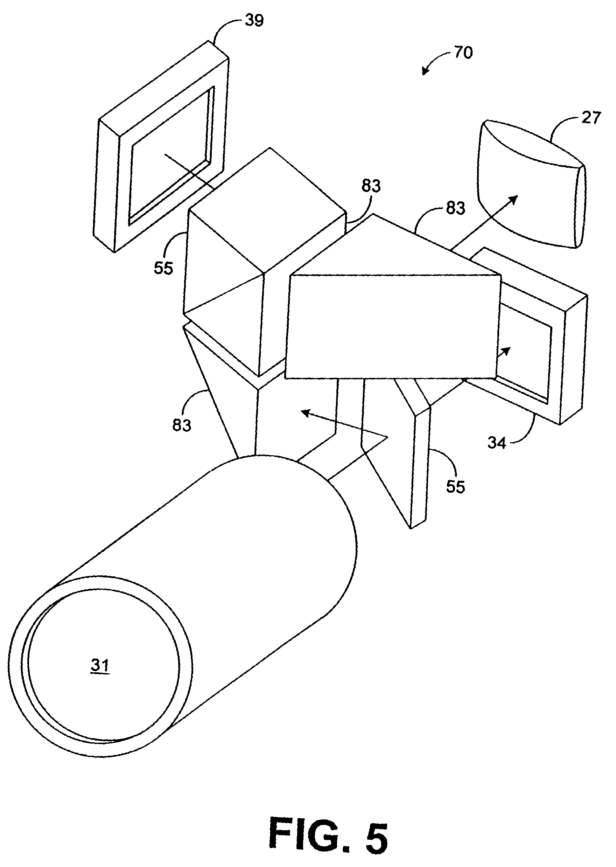

The camera system 70 may include other optical devices to correctly orient the images passing through the lens 27. For example, FIG. 5 depicts additional prisms 83 that may be employed to achieve this functionality. The camera system 70 may employ other configurations and include other devices that reflect refract, or otherwise manipulate the images produced by the viewfinder 82.

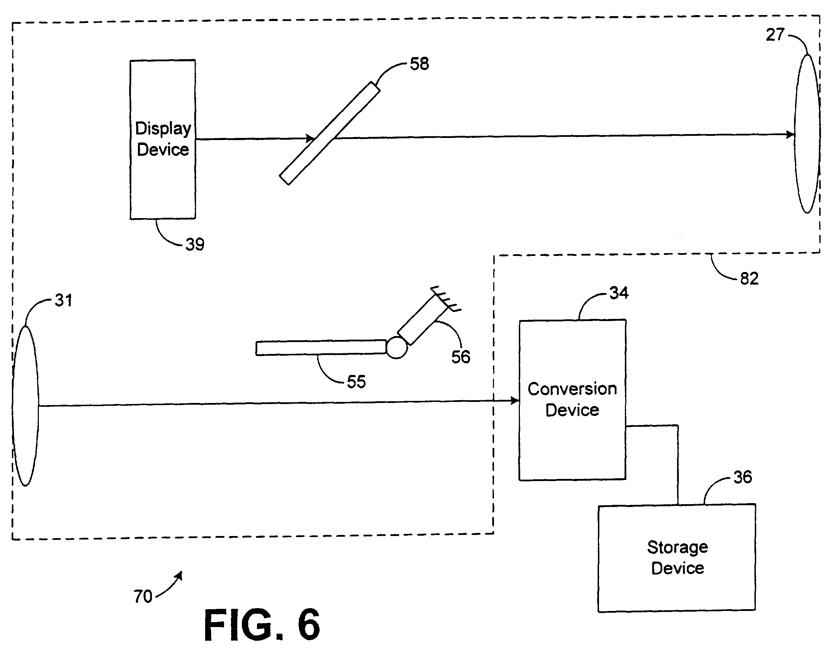

To prevent interference with the user's view of the image produced by display device 39, the beam splitter 55 can be rotated or otherwise moved into a position where light from lens 31 is not reflected by the beam splitter 55 toward beam splitter 58, as shown by FIG. 6. Therefore, only light from the image displayed by display device 39 is transmitted toward the lens 27.

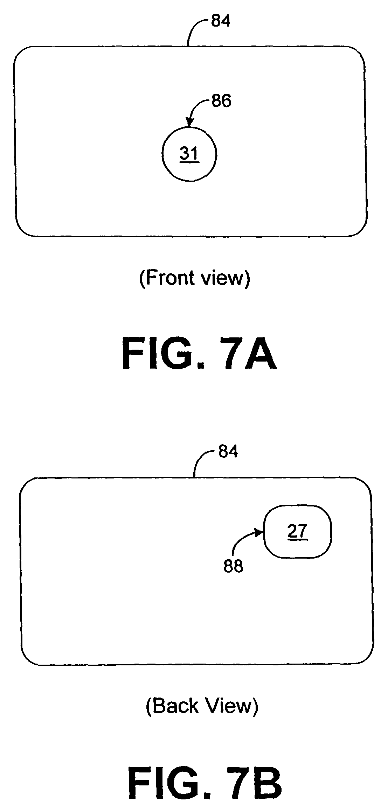

As shown by FIGS. 7A and 7B, the camera system 70 is preferably included within a housing 84. The housing 84 preferably includes two openings 86 and 88, and lenses 31 and 27 are respectively positioned within these openings 86 and 88 in the preferred embodiment, similar to housings of conventional cameras. Therefore, light passing through the openings 86 and 88 also respectively passes through lenses 31 and 27. As a result, lenses 27 and 31 serve as optical interfaces to the camera system 70 in that light is allowed to pass into and out of the system 70 via the lenses 27 and 31. Since the display device 39 is within the housing 84 and since the user typically places his eye close to the eyepiece lens 27, the image produced by the display device 39 is not substantially exposed to light outside of the system 70, and the image produced by the display device 39 is, therefore, less affected by the surrounding conditions than the image produced by the display device 39 of conventional systems 15 and 45.

In situations when the user prefers to view a picture already taken by the camera system 70, the storage device 36 of FIG. 4 is designed to transmit data signals defining a picture to the display device 39. In response, the display device 39 is designed to use the signals transmitted from the storage device 36 instead of the signals transmitted directly from the conversion device 34 to produce an image. Light from this image passes through beam splitter 58 and is received by lens 27. As a result the user may view the image of the picture defined by the data transmitted from storage device 36 by looking through lens 27.

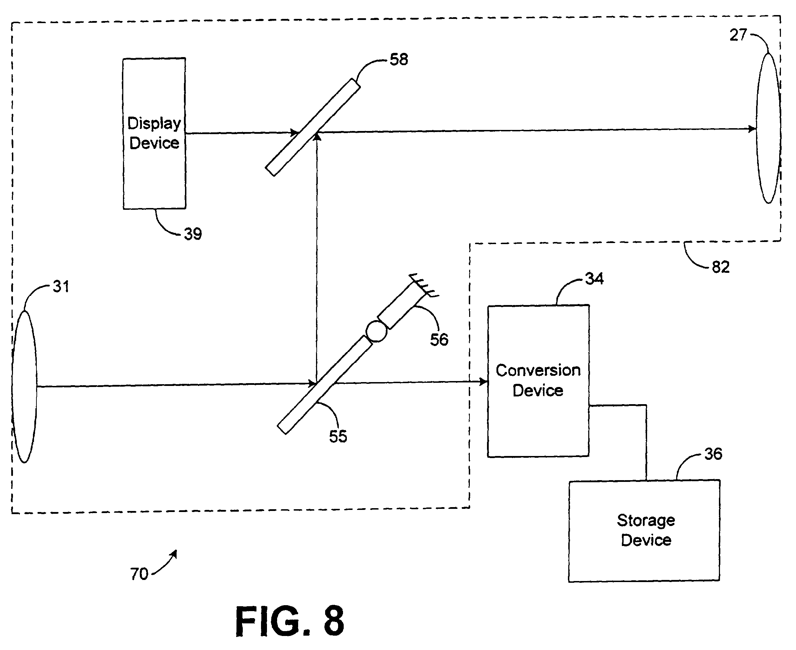

In addition, an image of the light received by lens 31 may be superimposed with the image produced by the display device 39, if desired. In this regard, the display device 39 is configured to produce an image based on signals received from either the conversion device 34 or the storage device 36, as described hereinabove. However, in addition, the beam splitter 55 is positioned such that light from lens 31 is reflected toward beam splitter 58, as shown by FIG. 8. Therefore, at least a portion of this light reflected from beam splitter 55 is further reflected by beam splitter 58 toward lens 27, and the image seen by the user looking through the lens 27 is the image produced by the display device 39 superimposed with the image produced by the light being reflected off of beam splitter 55 and beam splitter 58.

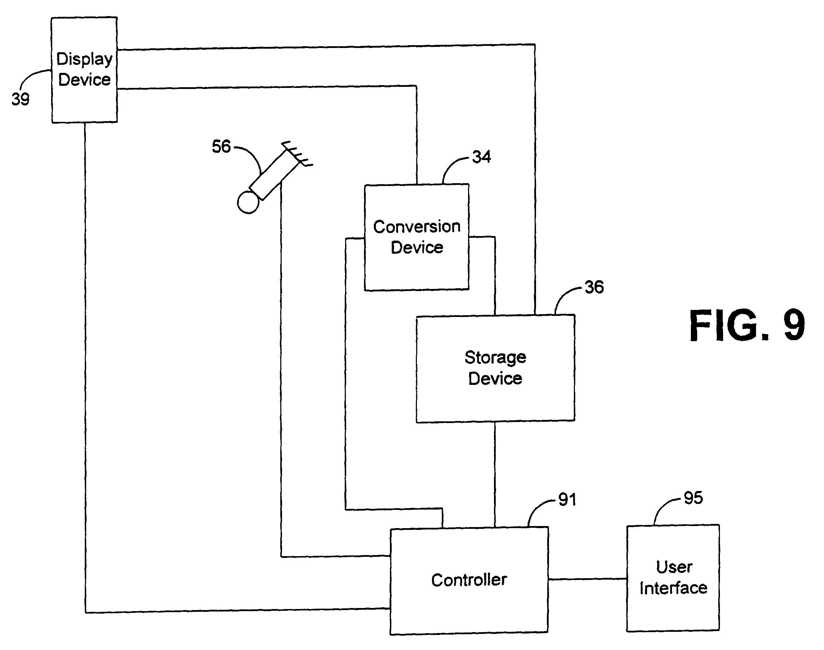

A controller 91, such as a digital signal processor, for example, is preferably used to control the operation of the system 70, as shown by FIG. 9. In this regard, a user interface 95 is preferably coupled to the controller 91. The interface 95 preferably includes buttons, switches or other mechanisms that allow the user to provide the controller 91 with inputs. Therefore, the user may provide inputs via interface 95 indicating a desire to see light received by lens 31 and not from display device 39.

In response, the controller 91 transmits control signals to conversion device 34 and storage device 36 instructing the conversion device 34 and storage device 36 to refrain from transmitting data to the display device 39. Alternatively, the controller 91 can be configured to transmit a control signal to the display device 39 instructing the display device 39 to refrain from producing an image. In either case, the display device 39 fails to produce an image.

The controller 91 also transmits a control signal to appropriately position the beam splitter 55 such that light from the lens 31 is reflected off of beam splitter 55 toward beam splitter 58. In this regard, the controller 91 transmits a signal to positioning device 56. In response to the signal from controller 91, the positioning device 56, if necessary, moves the beam splitter 55 such that light from lens 31 is reflected by the beam splitter 55 toward beam splitter 58. Consequently, by looking through the lens 27, the user is able to see an image defined by the light received by lens 31.

The user may also provide inputs via interface 95 indicating a desire to see an image of the scene currently viewed by the lens 31 using the display device 39 instead of viewing light received by the lens 31. In response, the controller 91 transmits a control signal to positioning device 56 instructing the positioning device 56 to position the beam splitter 55 such that light from the lens 31 is not reflected by the beam splitter 55 toward beam splitter 58. In response, the positioning device 56 moves the beam splitter 55, if necessary, such that light received from lens 31 is not reflected toward beam splitter 58. The controller 91 also transmits a control signal to conversion device 34 instructing the conversion device 34 to transmit signals defining the image of the light received by conversion device 34 to display device 39. As a result, display device 39 produces an image based on these signals, and the user can view the image produced by the display device 39 by looking through the lens 27.

The user may also provide inputs via interface 95 indicating a desire to see an image of a picture already taken instead of the image currently viewed by the lens 31. In response, the controller 91 transmits a control signal to positioning device 56 instructing the positioning device 56 to position the beam splitter 55 such that light from the lens 31 is not reflected by the beam splitter 55 toward beam splitter 58. In response, the positioning device 56 moves the beam splitter 55, if necessary, such that light received from lens 31 is not reflected toward beam splitter 58. The controller 91 also transmits a control signal to storage device 36 instructing the storage device 36 to transmit signals defining the picture to be displayed by the display device 39. The display device 39 receives these signals and produces an image based on these signals. and the user can view the image produced by the display device 39 by looking through the lens 27.

In addition, the user may also provide inputs via interface 95 indicating a desire to see an image of the light received by lens 31 superimposed with the image produced by the display device 39. In response, the controller 91 is configured to transmit control signals as described hereinabove to cause the display device 39 to produce an image based on signals received either from the conversion device 34 or the storage device 36. However, in addition, the controller 91 also transmits a control signal to the positioning device 56 as described hereinabove to cause the positioning device 56 to move the beam splitter 55, if necessary, such that light from the lens 31 is reflected toward beam splitter 58. Therefore, the image seen by the user looking through the lens 27 is the image produced by the display device 39 superimposed with the image produced by the light being reflected off of both beam splitters 55 and 58.

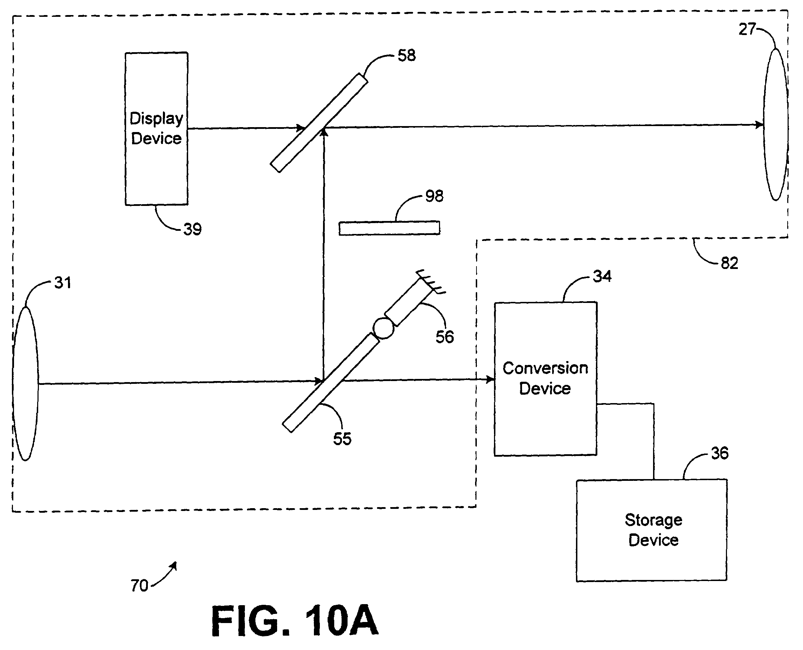

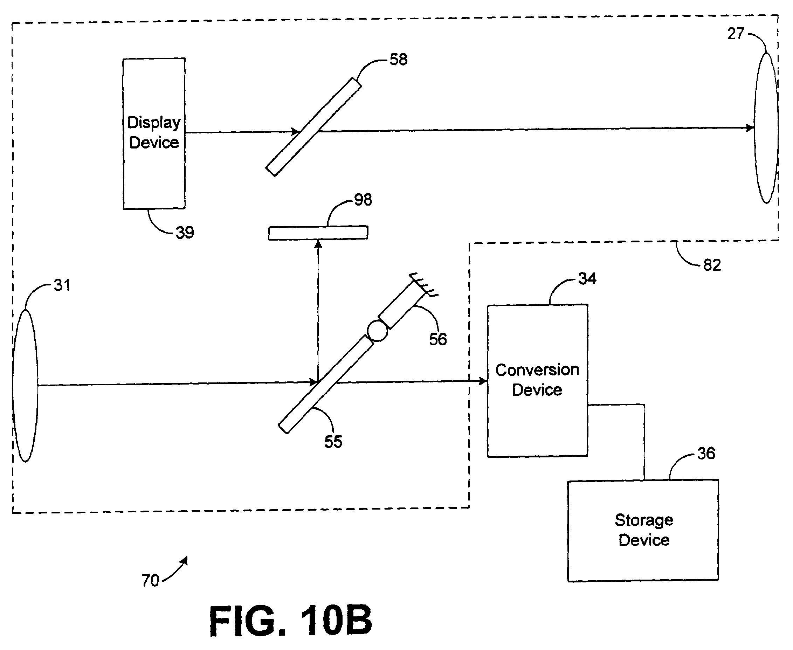

It should be noted that other techniques may be employed to control the operation of the system 70. For example, a shutter 98 may be inserted between beam splitter 55 and beam splitter 58 as shown by FIGS. 10A and 10B. In situations where the user wishes to see an image from light received by lens 31 and reflected by beam splitters 55 and 58, the shutter 98 should be open, as shown by FIG. 10A. In other words, the shutter 98 should be positioned such that light reflected by the beam splitter 55 is allowed to pass by shutter 98 and reflect off of beam splitter 58.

However, in other situations, when the user wishes to only view the image produced by display device 39, the shutter 98 should be closed, as shown by FIG. 10B. In other words, the shutter 98 should be positioned such that light reflected off of beam splitter 55 is blocked by shutter 98 and, therefore, does not reflect off of beam splitter 58.

Although not shown, the shutter 98 can also be positioned between the lens 31 and the beam splitter 55. In situations where the user wishes to see an image from light received by lens 31 and reflected by beam splitters 55 and 58, the shutter 98 should be open such that the image formed by the lens 31 is allowed to pass the shutter and be received by the beam splitter 55. However, in other situations, when the user wishes to only view the image produced by display device 39, the shutter 98 should be closed such that the image formed by the lens 31 is blocked by shutter 98 and is, therefore, not received by beam splitter 55.

In addition, it should also be noted that techniques for controlling the direction of light are well known in the art. Therefore, light can be manipulated in an infinite number of ways to achieve the same results. For example, the configuration of the system 70 can be changed such that the light described hereinabove can be reflected in different directions and any number of times without departing from the principles of the present invention. In fact, additional prisms and/or mirrors may be desirable to orient the images correctly for the user.

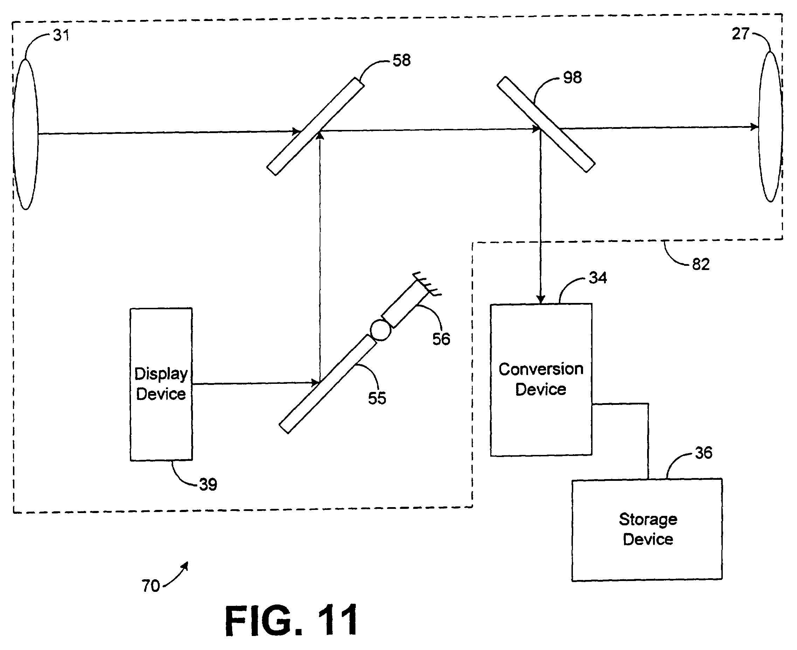

In addition, the configuration of the system 70 can be changed such that light described hereinabove as reflecting off of the beam splitter 55 or beam splitter 58 can pass through the beam splitter 55 or beam splitter 58 instead and such that light described hereinabove as passing through the beam splitter 55 or beam splitter 58 can reflect off of the beam splitter 55 or beam splitter 58 instead. As an example, refer to FIG. 11 where light from lens 31 passes through beam splitter 58 instead of reflecting off it, as described hereinabove for FIG. 4. Furthermore, the light received by conversion device 34 is reflected off of another beam splitter 98 instead of passing through beam splitter 55, as described hereinabove for FIG. 4.

Other examples of other configuration for the system 70 are shown in U.S. Patent Application (Attorney Docket No. 10971486) entitled "Digital Camera System and Method for Displaying Images via an Optical Viewfinder," and filed by Campbell on the same date as this application, which is incorporated herein by reference.

It should be emphasized that the above-described embodiments of the present invention, particularly, any "preferred" embodiments, are merely possible examples of implementations, merely set forth for a clear understanding of the principles of the invention. Many variations and modifications may be made to the above-described embodiment(s) of the invention without departing substantially from the spirit and principles of the invention. All such modifications and variations are intended to be included herein within the scope of the present invention.

## Claims

1. A digital camera system (70), comprising:
a lens (31);
a conversion device (34) configured to receive light from said lens (31) and to produce data signals based on said light;
a storage device (36) coupled to said conversion device (34), said storage device (36) configured to store information based on said data signals;
a display device (39) coupled to said storage device (36), said display device (39) configured to produce an image based on said data signals; and
a first beam splitter (58) positioned within a path of travel of said image and said light.

2. The system (70) of claim 1, further comprising a second beam splitter (55) positioned such that said light from said lens (31) is simultaneously transmitted toward said first beam splitter (58) and said conversion device (34).

3. The system (70) of claim 1, wherein said light from said lens (31) is superimposed with said image produced by said display device (39).

4. The system (70) of claim 1, further comprising a housing (84) coupled to said lens (31), said housing (84) having an opening, wherein said light and said image pass through said opening from said first beam splitter (58).

5. A method for displaying images received by a digital camera (70), comprising the steps of:
passing light through a lens (31);
transmitting said light to a beam splitter (58);
producing data signals based on said light;
producing an image based on said data signals; and
transmitting said image to said beam splitter (58).

6. The method of claim 5, further comprising the step of simultaneously performing said transmitting steps.

7. The method of claim 5, further comprising the steps of:
providing a housing (84) having an opening; and
transmitting said light and said image through said opening from said beam splitter (58).

8. A method for displaying images received by a digital camera (70), comprising the steps of:
providing a housing (84) having an opening;
receiving light;
storing digital data based on said light;
producing an image based on said digital data;
transmitting said light through said opening; and
transmitting said image through said opening.

9. The method of claim 8, further comprising the step of simultaneously performing said transmitting steps.

10. The method of claim 8, further comprising the steps of:
providing a beam splitter (58); and
transmitting said light and said image to said beam splitter (58).
